# EUROPEAN PATENT SPECIFICATION

(11) **EP 3 150 472 B1**
(45) Date of publication and mention of the grant of the patent: **13.10.2021**
(21) Application number: 16190988.2
(22) Date of filing: 28.09.2016
(51) Int. Cl.: B62J 37/00, B62J 11/19

(54) **MOTORCYCLE**
MOTORRAD
MOTOCYCLETTE

(30) Priority: 30.09.2015 JP 2015192845
(43) Date of publication of application: 05.04.2017
(73) Proprietor: Honda Motor Co., Ltd., Minato-ku Tokyo 107-8556 (JP)
(72) Inventor: KAWASUMI, Shinji, SAITAMA, 351-0193 (JP); IBARAKI, Yuya, SAITAMA, 351-0193 (JP)
(74) Representative: Brevalex

(56) References cited:
- EP-A1- 2 249 009
- EP-A1- 2 375 049
- JP-A- 2015 155 245
- US-A1- 2010 243 355

## Description

### Technical Field

The present invention relates to motorcycles and, more particularly, to structure of a vehicle with a petrol engine for keeping hold of a canister on the vehicle body, the canister being placed between a fuel tank and an engine intake system for prevention of evaporation emission of petrol fuel.

### Background of the Invention

Commonly, as disclosed in Patent Literature 1, a motorcycle is known which has a canister (11) connected to an inlet hose (12) for drawing air including an evaporated fuel in a fuel tank (131) and a return hose (13) for allowing the evaporated fuel absorbed in the canister to flow back to the intake system, and a bracket (15) supporting the canister (11).

A further motorcycle with a canister is shown in the document JP2015155245. This document shows the features of the preamble of claim 1.

### Description of the Prior Art

Patent Literature 1 -JP-A No. 2014-000 895

### Summary of Invention

### Technical problem

As described above, a canister is connected to an inlet holes extending from the fuel tank and a return hose for allowing the evaporated fuel to flow back to the intake system. On the other hand, in motorcycles, because a variety of cables for electrical components and the like exist, routing of such cables may be complicated.

It is an object of the present invention to provide a motorcycle enabling a simplification of routing around a canister.

### Solution to problem

A motorcycle in accordance with the present invention to address the technical problem is:
a motorcycle having a canister to which a hose for a flow from a fuel tank and another hose for a flow to an intake system are connected, and a canister holder supporting the canister.

The canister holder includes, in a combined form, a canister supporter supporting the canister and a cable supporter supporting a cable of an electrical component. The canister supporter and the cable supporter are configured to orient an axial direction of the canister supported at the canister supporter and an axial direction of the cable supported at the cable supporter in the same direction.

With the motorcycle, the canister holder includes the canister supporter supporting a canister and the cable supporter supporting a cable of an electrical component, and the axial direction of the canister supported by the canister supporter and the axial direction of the cable supported by the cable supporter are oriented in the same direction. This enables a simplification of routing around a canister.

In the motorcycle, the canister holder includes a plurality of the cable supporters and the canister supporter is configured to support the canister to orient the axial direction of the canister in a up-and-down direction.

Such configuration enables a further simplification of the routing around the canister, because the hoses connected to the canister and the cables supported at the plurality of cable supporters are oriented in the same direction. In addition, because all of the hoses connected to the canister and the cables supported at the plurality of cable supporters are oriented in the up-and-down direction, the routing process is facilitated.

In the motorcycle,
a battery case supporting a battery is further included. The battery case is configured to have a canister-holder supporter supporting the canister holder.

Such configuration enables omission of a supporting member for the canister holder, achieving structural simplification.

In the motorcycle,
the battery case may be configured to include a brake-switch supporter supporting a brake switch, in which the brake switch may be supported to orient an axial direction of the brake switch in the same direction as the axial direction of the cable.

Such configuration enables a simplification of routing around the battery and the canister, and also facilitates the routing process.

In the motorcycle,
the canister holder may be configured to further include a fuse-box supporter supporting a replacement fuse box housing a replacement fuse and a tool mount element mounted with a tool for removing a fuse from the fuse box.

Such configuration enables collective placement of the replacement fuse box and the fuse removing tool around the canister.

In the motorcycle,
the battery case may be configured to have an ECU supporter arranged opposite to the canister holder supporter to support an ECU.

Such configuration enables making effective use of the battery case to omit not only a supporting member for the canister holder but also a supporting member for the ECU, achieving a further structural simplification.

In the motorcycle,
the battery case may be configured to have a front portion at which the canister-holder supporter is provided, an upper portion and a rear portion supported by a vehicle-body frame, and a lower front portion supported by abutting on the vehicle-body frame.

Such configuration enables supporting the canister and the cables in the canister holder in order to provide stable supporting of them even if the total weight of them is increased.

### Brief Description of Drawings

Fig. 1 is a side view according to an embodiment of a motor cycle in accordance with the present invention.
Fig. 2 is an enlarged view of a part of Fig. 1.
Fig. 3 is a front view of Fig. 2 with a part being omitted.
Fig. 4 is a top view of Fig. 2 with a part being omitted.
Fig. 5 illustrates views of an example canister, in which Fig. 5(a) is a top view, Fig. 5(b) is a front view and Fig. 5(c) is a bottom view.
Fig. 6 illustrates views of an example canister holder, in which Fig. 6(a) is a top view, Fig. 6(b) is a front view, Fig. 6(c) is a left side view, Fig. 6(d) is a sectional view taken along arrow line d-d of Fig. 6(a) with a part being omitted, and Fig. 6(e) is a front view illustrating an example of fuse tools.
Fig. 7 illustrates views of an example battery case, in which Fig. 7(a) is a top view, Fig. 7(b) is a front view and Fig. 7(c) is a left side view.
Fig. 8 is a top view of an example modification of a canister holder.

### Description of Embodiments

An embodiment of a motorcycle according to the present invention will now be described with reference to the accompanying drawings. It should be noted that the drawings will viewed in a direction of signs, and words "front", "rear", "left", "right", "up" and "down" in the following description are used with respect to the directions as viewed by an operator, while if necessary, in the drawings, the forward direction of the vehicle is designated by reference sign Fr, the rearward direction Rr, the left direction L, the right direction R, the upward direction U, and the downward direction of the vehicle is designated by reference sign D. In each drawing, the same parts or corresponding parts are designated by the same signs.

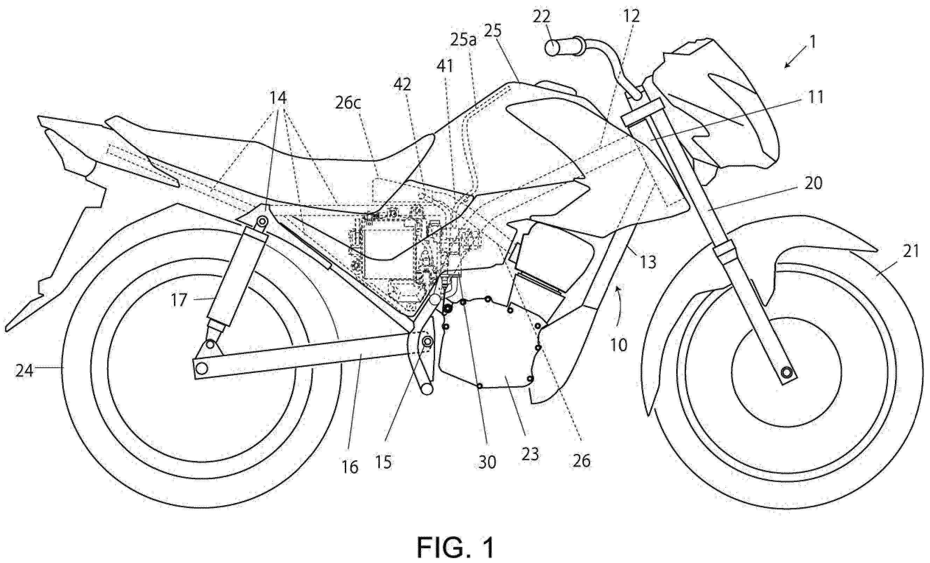

As illustrated in Fig. 1, a motorcycle 1 according to the embodiment includes a vehicle-body frame 10.

The vehicle-body frame 10 includes a head pipe 11 mounted at the front end of the vehicle body, a main frame 12 extending rearward from the head pipe 11, a down frame 13 extending from the head pipe 11 in an obliquely downward direction, and a rear frame 14 extending rearward from a rear portion of the main frame 12.

A pivot shaft 15 is attached to a lower portion of the main frame 12. Swing arms 16 are attached to able to swing in the up-and-down direction about the pivot shaft 15. A pair of left and right rear cushion units 17 is connected between the rear portions of the swing arms 16 and the rear frames 14.

A front fork 20 is steerably attached to the head pipe 11. A front wheel 21 is rotatably attached to the lower end of the front fork 20. A steering handlebar 22 is attached to an upper portion of the front fork 20.

A petrol engine (hereinafter simply referred to as an "engine") 23 is suspended by a lower portion of the main frame 12 and a lower portion of the down frame 13.

A rear wheel 24 driven by the ending 23 is supported at rear ends of the swing arms 16.

A fuel tank 25 is mounted on the main frame 12, so that the petrol stored in the fuel tank 25 is fed to the engine 23 via a refueling system (not shown).

An intake system 26 is arranged at the rear of the engine 23, so that air is taken into the engine through the intake system 26. An air cleaner 26c is installed at an upstream end of the intake system 26, so that air from which dust is removed is fed into the engine 23 by passing through the air cleaner 26c.

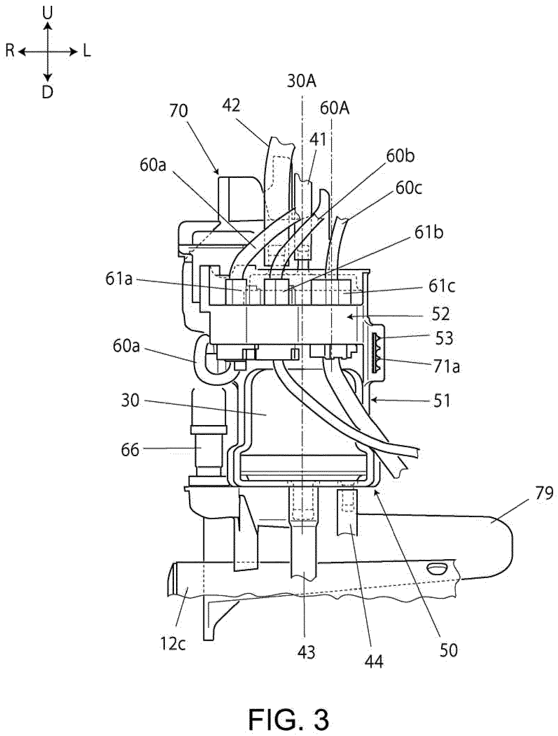

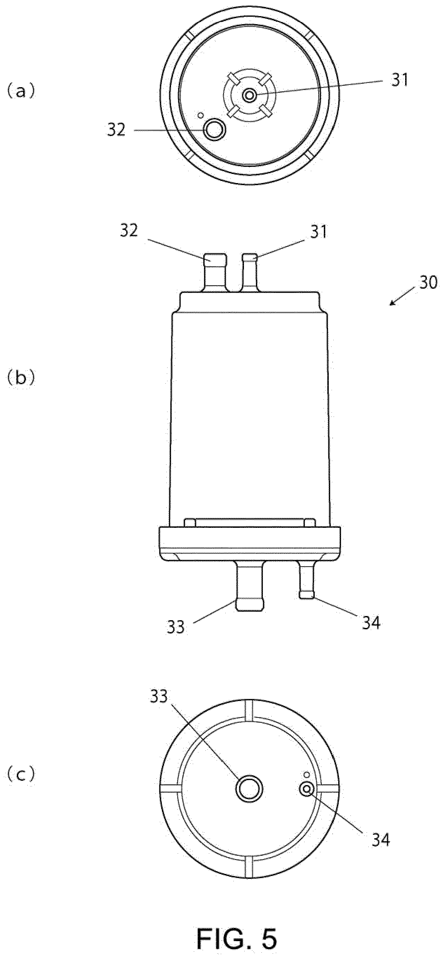

A canister 30 for prevention of evaporation emission of petrol fuel is installed between the fuel tank 25 and the intake system 26 (see Fig. 3, Fig. 5). The canister 30 according to the embodiment is placed between the fuel tank 25 and the air cleaner 26c forming part of the intake system 26.

The fuel tank 25 has an outlet pipe 25a provided therein to exhaust air including an evaporated fuel within the fuel tank 25 from the fuel tank 25. The outlet pipe 25a is connected to an inlet port 31 of the canister 30 through an inlet hose 41 described later. An outlet port 32 of the canister 30 is connected to the air cleaner 26c through a return hose 42. The internal structure itself of the canister 30 is well-known structure.

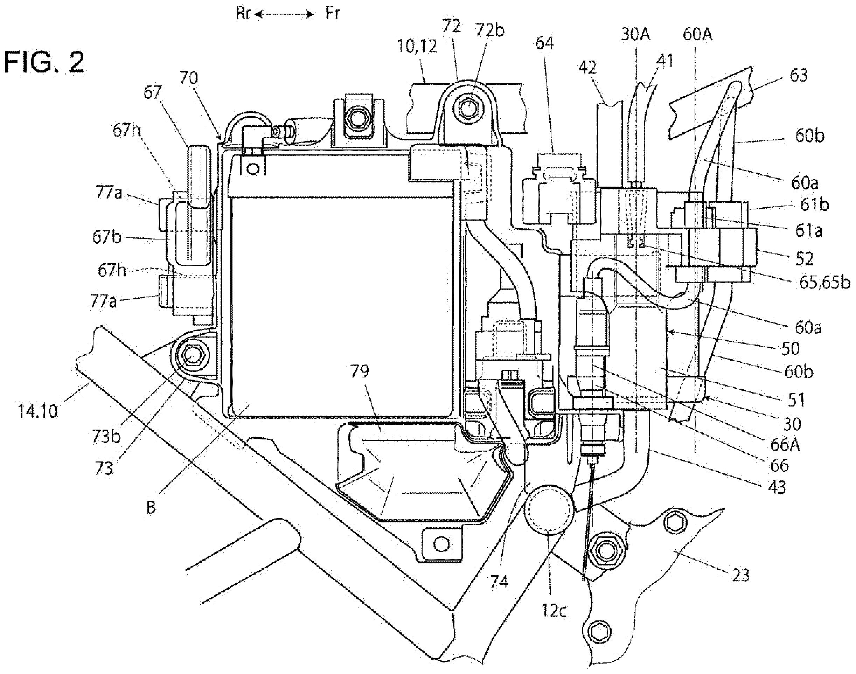

As illustrated in Fig. 2 to Fig. 4, the canister 30 is supported by a canister holder 50.

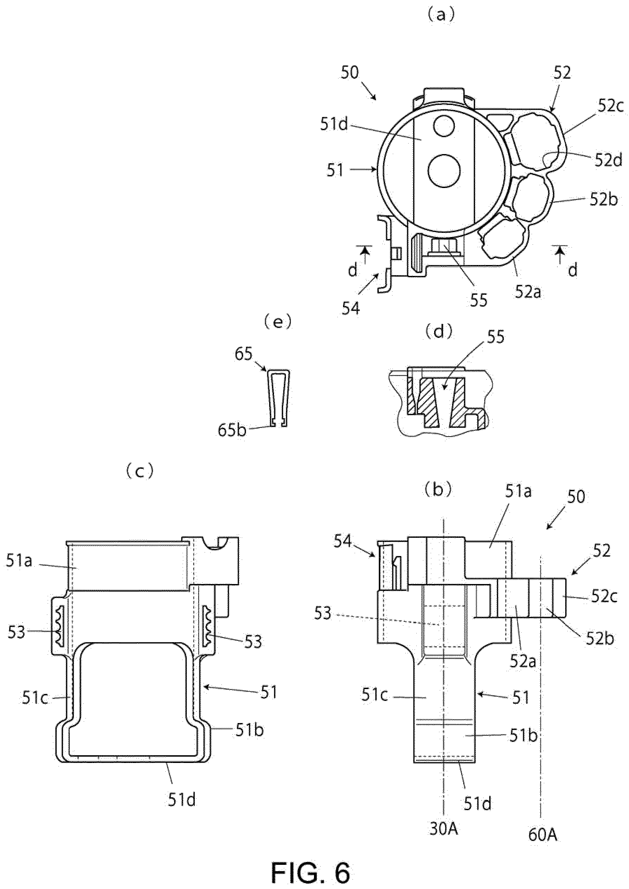

As illustrated also in Fig. 6, the canister holder 50 includes a canister supporter 51 supporting the canister 30, and cable supporters 52 (a, b, c) supporting cables 60 (a, b, c) of electrical components.

As illustrated in Fig. 2 and Fig. 3, the canister supporter 51 and the cable supporter 52 are configured such that an axial direction 30A of the canister 30 supported by the canister supporter 51 and an axial direction 60A of a cable 60 (a, b, c) supported by the cable supporter 52 are oriented in the same direction.

With the motorcycle 1, the canister holder 50 includes the canister supporter 51 supporting the canister 30 and the cable supporters 52 (a, b, c) supporting the cables 60 of the electrical components and the axial direction 30A of the canister 30 supported by the canister supporter 51 and the axial directions 60A of the cables 60 (a, b, c) supported by the cable supporters 52 are oriented in the same direction. As a result, routing around a canister can be simplified.

It should be understood that because the cables 60 (a, b, c) supported by the cable supporters 52 (a, b, c), except for the areas of the cables 60 (a, b, c) supported at the cable supporters 52 (a, b, c), are bent in various directions in accordance with the layout of target components connected to the cables, in the application the axial direction 60A of each cable 60 (a, b, c) may refer to the axial direction of the area of the cable 60 (a, b, c) supported at the cable supporter 52 (a, b, c).

As illustrated in Fig. 5, the canister 30 is an approximately cylindrical component as a whole, with the aforementioned inlet port 31 and outlet port 32 being provided on an upper portion and a vent-to-atmosphere port 33 and a drain 34 being provided on a lower portion.

As described earlier, and as illustrated in Fig. 2 to Fig. 4, the inlet hose 41 is connected to the inlet port 31 and the return hose 42 is connected to outlet port 32. Vent-to-atmosphere hoses 43, 44 are connected respectively to the vent-to-atmosphere port 33 and the drain 34.

As illustrated in Fig. 2 to Fig. 4 and Fig. 6, the canister holder 50 includes a plurality of (three in the drawings) cable supporters 52 (a, b, c), and the canister supporter 51 supports the canister 30 such that the axial direction 30A (Fig. 2, Fig. 3) of the canister 30 is oriented in the up-and-down directions.

Such configuration causes the hoses 41 to 44 connected to the canister 30 and the cables 60 (a, b, c) supported by the plurality of cable supporters 52 (a, b, c) to be oriented in the same direction, enabling a further simplification of the routing around the canister 30. In addition, because all the hoses 41 to 44 connected to the canister 30 and all the cables 60 (a, b, c) supported at the plurality of cable supporters 52 (a, b, c) are oriented in the vertical direction, the routing process is facilitated.

It should be understood that because the hoses 41 to 44 connected to the canister 30, except for the connection portions of the hoses 41 to 44 to the canister 30 and portions close to the connection portions, are bent in various directions in accordance with the layout of target components connected to the canister 30, in the application a direction of a hose may refer to a direction of a hose at and around the connection portion of the hose to the canister 30.

As illustrated in Fig. 2 to Fig. 4 and Fig. 6, the canister supporter 51 of the canister holder 50 has a cylindrical upper support portion 51a holding an upper portion of the canister 30 and a lower holding portion 51b holding a lower portion of the canister 30. The lower holding portion 51b has hanging portions 51c extending downward from both the left and right sides of the upper support portion 51a to support the lower side portions of the canister 30, and a bottom support portion 51d integrally connecting lower portions of the respective hanging portions 51c to each other to support the bottom of the canister 30.

Each of the cable supporters 52 (a, b, c) is formed in an approximately ring shape as viewed from the top, and has an inner-wall surface 52d shaped to be tailored to a cable connecting member (coupler, connector) 61.

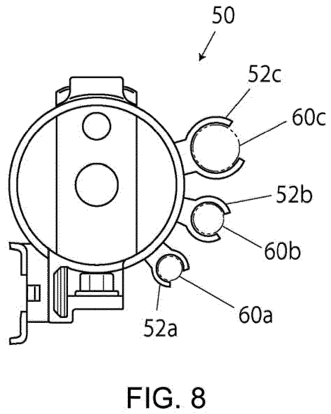

Specifically, in the embodiment, the cable supporter 52 is configured to support the cable connecting member 61 (a, b, c) in order to support the cable 60 (a, b, c). For example, as illustrated in Fig. 8, each of the cable supporters 52 (a, b, c) may be formed in a C shape as viewed from the top and configured to directly hold the cable 60 by means of its elasticity.

Cables to be supported by the cable supporters 52 may be determined as appropriate. In Fig. 2 to Fig. 4, the cable 60a is for a brake switch, the cable 60b is for an ACG and the cable 60c is for a shift change switch. However, other cables may be supported. Incidentally, the cables 60 (a, b, c) are bound into a harness 63.

The canister holder 50 includes a fuse-box supporter 54 (Fig. 6) supporting a replacement fuse box 64 housing a replacement fuse, and a tool mount element 55 to which a tool 65 for removing a fuse from the replacement fuse box 64 is mounted.

Such configuration enables collective placement of the replacement fuse box 64 and the fuse removing tool 65 around the canister 30.

The fuse removing tool 65 is formed in a tweezers shape as illustrated in Fig. 6(e). The tool mount element 55, which is tailored to the shape of the tool 65, is a hole of an inverted trapezoid shape tapering downward to allow the tool 65 to be inserted (pressed into the hole) from above. For removing the tool 65, the lower end 65b may be pressed upward.

As illustrated in Fig. 2 to Fig. 4 and Fig. 7, the motorcycle includes a battery case 70 supporting a battery B.

The battery case 70 has a canister-holder supporter 71 supporting the canister holder 50.

Such configuration may enable structural simplification because a supporting member for the canister holder 50 can be omitted.

The canister-holder supporter 71 has left and right arms 71a projecting forward from a battery case body 70b. The arms 71a are inserted respectively into left and right insertion holes 53 (Fig. 6) formed in upper left and right portions of the canister holder 50 in order to support the canister holder 50.

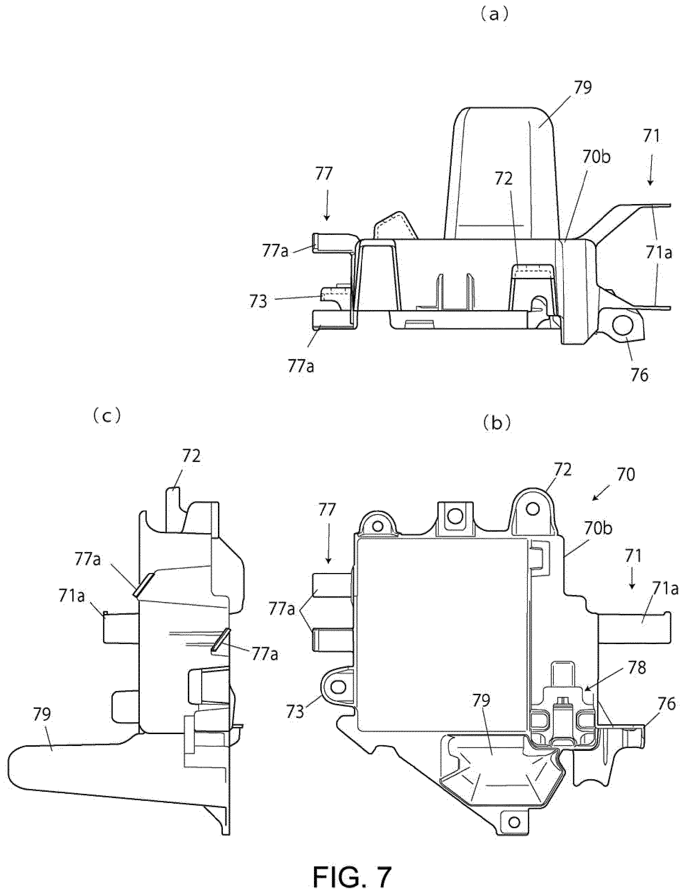

The battery case 70 includes a brake-switch supporter 76 (Fig. 7) supporting a brake switch 66. The brake switch 66 mounted to the brake-switch supporter 76 is supported such that an axial direction 66A (Fig. 2) of the brake switch 66 is oriented in the same direction as the axial direction 60A of the cable 60. As described earlier, the cable 60a of the brake switch 66 is supported with its axial direction being oriented in the same direction as the axial directions of the other cables.

Such configuration enables a simplification of routing around the battery B and the canister 30, and also facilitates the routing process.

The battery case 70 has an ECU supporter 77 provided opposite to the canister-holder supporter 71 to support an ECU 67.

Such configuration enables making effective use of the battery case 70 to omit not only a supporting member for the canister holder 50 but also a supporting member for the ECU 67, achieving a further structural simplification.

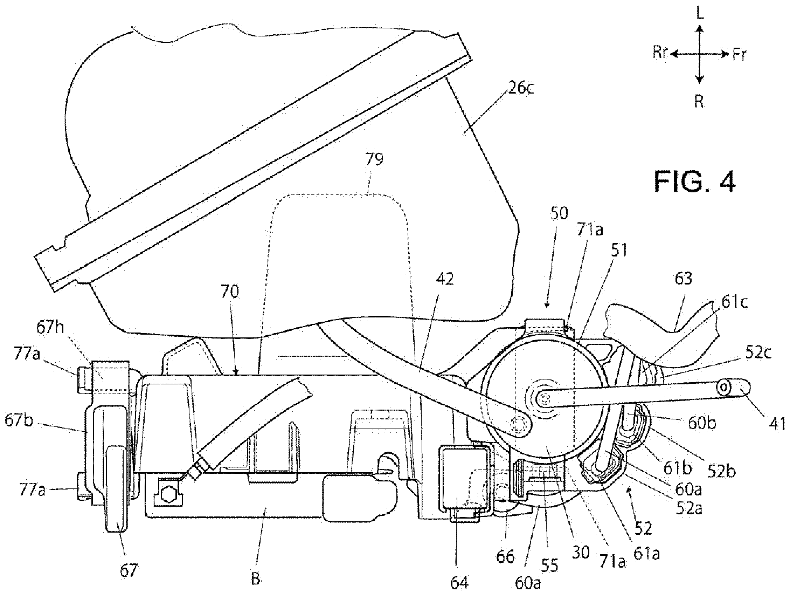

The ECU supporter 77 has a pair of arms 77a projecting rearward from the battery case body 70b. The arms 77a are inserted respectively into a pair of insertion holes 67h (Fig. 2, Fig. 4) formed in an approximately rectangular cylindrical ECU holder 67b in order to support the ECU 67.

The battery case 70 is supported such that an upper portion 72 and a rear portion 73 are supported by the vehicle-body frame 10 and a lower front portion 74 abuts on the vehicle-body frame 10.

Such configuration enables supporting the canister 30 and the cables in the canister holder 50 in order to provide stable supporting of them even if the total weight of them is increased.

The upper portion 12 is secured to the main frame 72 with a bolt 72b, while the rear portion 73 is secured to the rear frame 14 with a bolt 73b. The lower front portion 74 is supported by abutting on a cross member 12c provided in the main frame.

Reference sign 79 denotes a tool box storing vehicle-mounted tools (not shown). Storing the tools further increases the total weight acting on the battery case 70, but the battery case 70 is supported with stability by the above-described configuration (the configuration in which the upper portion 72 and the rear portion 73 are supported by the vehicle-body frame 10 and the lower front portion 74 is supported by abutting on the vehicle-body frame 10).

The embodiment in accordance with the present invention has been described above, but the present invention is not limited to the above embodiment and various modifications may be made as appropriately without departing from the scope of this invention defined by the appended claims.

### Description of the Reference Numerals

- 1 ...: MOTORCYCLE
- 10 ...: VEHICLE-BODY FRAME
- 25 ...: FUELTANK
- 26 ...: INTAKE SYSTEM
- 30 ...: CANISTER
- 41, 42 ...: HOSES
- 50 ...: CANISTER HOLDER
- 51 ...: CANISTER SUPPORTER
- 52(a, b, c) ...: CABLE SUPPORTERS
- 54 ...: FUSE-BOX SUPPORTER
- 60(a, b, c) ...: CABLES
- 64 ...: REPLACEMENT FUSE BOX
- 65 ...: TOOL
- 66 ...: BRAKE SWITCH
- 70 ...: BATTERY CASE
- 71 ...: CANISTER-HOLDER SUPPORTER
- 76 ...: BRAKE-SWITCH SUPPORTER
- 77 ...: ECU SUPPORTER

## Claims

1. A motorcycle, comprising:
an approximately-cylindrical canister (30) to which a hose (41) for a flow from a fuel tank (25) and a hose (42) for a flow to an intake system (26) are connected; and
a canister holder (50) supporting the canister (30),
**characterised in that**
the canister holder (50) includes, in a combined form, a canister supporter (51) supporting the canister (30) and a plurality of cable supporters (52) supporting a plurality of cables (60) of an electrical component, with each cable supporter (52) being formed in an approximately ring shape as viewed from the top, and
the canister supporter (51) and the cable supporters (52) are configured to orient an axial direction (30A) of the canister (30) supported at the canister supporter (51) and an axial direction (60A) of the cables (60) supported at the cable supporters (52) in the up-and-down direction,
further comprising a battery case (70) supporting a battery (B),
wherein the battery case (70) has a canister-holder supporter (71) supporting the canister holder (50).

2. The motorcycle according to claim 1,
wherein the battery case (70) includes a brake-switch supporter (76) supporting a brake switch (66), the brake switch (66) being supported to orient an axial direction (66A) of the brake switch (66) in the same direction as the axial direction (60A) of the cables (60).

3. The motorcycle according to claim 1 or 2,
wherein the canister holder (50) further includes:
a fuse-box supporter (54) supporting a replacement fuse box (64) housing a replacement fuse; and
a tool mount element (55) mounted with a tool (65) for removing a fuse from the fuse box (64).

4. The motorcycle according to claim 1 or claim 3,
wherein the battery case (70) has an ECU supporter (77) arranged opposite to the canister holder supporter (71) to support an ECU (67).

5. The motorcycle according to any one of claims 1, 3 and 4, wherein the battery case (70) has:
a front portion at which the canister-holder supporter (71) is provided;
an upper portion (72) and a rear portion (73) supported by a vehicle-body frame (10); and
a lower front portion (74) supported by abutting on the vehicle-body frame (10).

## Patentansprüche

1. Motorrad, umfassend:
einen annähernd zylindrischen Behälter (30), an den ein Schlauch (41) für eine Strömung von einem Kraftstofftank (25) und ein Schlauch (42) für eine Strömung an ein Einlasssystem (26) angeschlossen sind; und
einen Behälterhalter (50), der den Behälter (30) trägt;
**dadurch gekennzeichnet, dass**
der Behälterhalter (50), in einer kombinierten Gestalt, einen Behälterträger (51), der den Behälter (30) trägt, und eine Mehrzahl von Kabelträgern (52) beinhaltet, die eine Mehrzahl von Kabeln (60) von einer elektrischen Komponente tragen, wobei jeder Kabelträger (52) in einer annähernd ringförmigen Form bei einer Betrachtung von oben gebildet ist, und
der Behälterträger (51) und die Kabelträger (52) dazu konfiguriert sind, eine axiale Richtung (30A) des Behälters (30), der an dem Behälterträger (51) getragen wird, und eine axiale Richtung (60A) der Kabel (60), die an den Kabelträgern (52) getragen werden, in der Oben-Unten-Richtung zu orientieren,
ferner umfassend ein Batteriegehäuse (70), das eine Batterie (B) trägt,
wobei das Batteriegehäuse (70) einen Behälterhalterträger (71) aufweist, der den Behälterhalter (50) trägt.

2. Motorrad nach Anspruch 1,
wobei das Batteriegehäuse (70) einen Bremsschalterträger (76) beinhaltet, der einen Bremsschalter (66) trägt, wobei der Bremsschalter (66) derart getragen wird, dass er eine axiale Richtung (66A) des Bremsschalters (66) in der gleichen Richtung, wie die axiale Richtung (60A) der Kabel (60), orientiert.

3. Motorrad nach Anspruch 1 oder 2,
wobei der Behälterhalter (50) ferner beinhaltet:
einen Sicherungskastenträger (54), der einen Ersatzsicherungskasten (64) trägt, der eine Ersatzsicherung aufnimmt; und
ein Werkzeugbefestigungselement (55), das mit einem Werkzeug (65) zum Entfernen einer Sicherung von dem Sicherungskasten (64) befestigt ist.

4. Motorrad nach Anspruch 1 oder Anspruch 3,
wobei das Batteriegehäuse (70) einen ECU-Träger (77) aufweist, der gegenüberliegend zu dem Behälterhalterträger (71) zum Tragen einer ECU (67) angeordnet ist.

5. Motorrad nach einem der Ansprüche 1, 3 und 4,
wobei das Batteriegehäuse (70) aufweist:
einen vorderen Bereich, an dem der Behälterhalterträger (71) vorgesehen ist;
einen oberen Bereich (72) und einen hinteren Bereich (73), die durch einen Fahrzeugkörperrahmen (10) getragen werden; und
einen unteren vorderen Bereich (74), der durch ein Anliegen auf dem Fahrzeugkörperrahmen (10) getragen wird.

## Revendications

1. Motocycle, comprenant :
un réservoir à charbon actif (30) approximativement cylindrique auquel sont raccordés un tuyau flexible (41) pour un écoulement depuis un réservoir à carburant (25) et un tuyau flexible (42) pour un écoulement vers un système d'admission (26) ; et
un porte-réservoir à charbon actif (50) supportant le réservoir à charbon actif (30),
**caractérisé en ce que**
le porte-réservoir à charbon actif (50) comporte, sous forme combinée, un support de réservoir à charbon actif (51) supportant le réservoir à charbon actif (30) et une pluralité de supports de câbles (52) supportant une pluralité de câbles (60) d'un composant électrique, chaque support de câbles (52) étant formé approximativement en forme d'anneau en vue de dessus, et
le support de réservoir à charbon actif (51) et les supports de câbles (52) sont configurés pour orienter une direction axiale (30A) du réservoir à charbon actif (30) supporté au niveau du support de réservoir à charbon actif (51) et une direction axiale (60A) des câbles (60) supportés au niveau des supports de câbles (52) dans la direction de haut en bas,
comprenant en outre un boîtier de batterie (70) supportant une batterie (B),
dans lequel le boîtier de batterie (70) a un support de porte-réservoir à charbon actif (71) supportant le porte-réservoir à charbon actif (50).

2. Motocycle selon la revendication 1,
dans lequel le boîtier de batterie (70) comporte un support d'interrupteur de freinage (76) supportant un interrupteur de freinage (66), l'interrupteur de freinage (66) étant supporté pour orienter une direction axiale (66A) de l'interrupteur de freinage (66) dans la même direction que la direction axiale (60A) des câbles (60).

3. Motocycle selon la revendication 1 ou 2,
dans lequel le porte-réservoir à charbon actif (50) comporte en outre :
un support de boîte à fusibles (54) supportant une boîte à fusibles de remplacement (64) logeant un fusible de remplacement ; et
un élément de montage d'outil (55) monté avec un outil (65) pour enlever un fusible de la boîte à fusibles (64).

4. Motocycle selon la revendication 1 ou la revendication 3,
dans lequel le boîtier de batterie (70) a un support d'unité de commande électronique (77) agencé opposé au support de porte-réservoir à charbon actif (71) pour supporter une unité de commande électronique (67).

5. Motocycle selon l'une quelconque des revendications 1, 3 et 4,
dans lequel le boîtier de batterie (70) a :
une portion avant au niveau de laquelle est prévu le support de porte-réservoir à charbon actif (71) ;
une portion supérieure (72) et une portion arrière (73) supportées par un cadre de caisse de véhicule (10) ; et
une portion avant inférieure (74) supportée par butée sur le cadre de caisse de véhicule (10).
